# EUROPEAN PATENT APPLICATION

(11) **EP 4 520 700 A1**
(43) Date of publication of application: **12.03.2025**
(21) Application number: 24172612.4
(22) Date of filing: 26.04.2024
(51) Int. Cl.: B65H 63/08, B65H 67/02, B65H 67/04, D01H 9/04, D01H 13/14, G05B 19/18

(54) **AUTOMATIC DOFFING COMMUNICATION METHOD, SYSTEM AND NETWORK DEVICE**

(30) Priority: 08.09.2023 CN 202311162852
(71) Applicant: Zhejiang Hengyi Petrochemical Co., Ltd., Zhejiang 311200 (CN)
(72) Inventor: WANG, Peng, ZHEJIANG, 311200 (CN); WU, Zhongliang, ZHEJIANG, 311200 (CN); NI, Jinmei, ZHEJIANG, 311200 (CN); PENG, Xiantao, ZHEJIANG, 311200 (CN); LI, Dake, ZHEJIANG, 311200 (CN)
(74) Representative: Lavoix

(57) **Abstract**

The present disclosure provides an automatic doffing communication method, a control system, a communication system and a network device. The method includes: receiving (S101) a doffing monitoring image from a terminal device; sending (S102) the doffing monitoring image to a text recognition system; receiving (S103) an automatic doffing scheduling task from an automatic doffing system; wherein the automatic doffing scheduling task comprises a task generated by the automatic doffing system according to a recognition result of the doffing monitoring image by the text recognition system; and sending (S104) the automatic doffing scheduling task to an automatic doffing device. According to the present disclosure, the automation degree of doffing in the spinning production process can be improved, and the doffing efficiency can be improved.

## Description

### TECHNICAL FIELD

The present disclosure relates to the field of computer technology, and in particular to the field of communication technology and automatic control technology.

### BACKGROUND

In current chemical fiber production, after the winding machine is fully rolled, the yarn spindle needs to be doffed from the winding machine and then transferred to subsequent inspection, packaging and other processes through a trolley or others. At present, the relevant data of the winding machine is mainly obtained by purchasing value-added services from the manufacturer of the winding machine. The data acquisition method is inflexible and costly, and easily leads to untimely doffing.

### SUMMARY

The present disclosure provides an automatic doffing communication method, system and device to solve or alleviate one or more technical problems in the prior art.

In a first aspect, the present disclosure provides an automatic doffing communication method, applied to a network device. The method includes:
receiving a doffing monitoring image from a terminal device;
sending the doffing monitoring image to a text recognition system;
receiving an automatic doffing scheduling task from an automatic doffing system; where the automatic doffing scheduling task includes a task generated by the automatic doffing system according to a recognition result of the doffing monitoring image by the text recognition system; and
sending the automatic doffing scheduling task to an automatic doffing device.

In a second aspect, the present disclosure provides an automatic doffing communication method, applied to an automatic doffing system. The method includes:
receiving a recognition result of a doffing monitoring image by a text recognition system; where the doffing monitoring image is received by the text recognition system from a network device;
generating an automatic doffing scheduling task according to the recognition result of the doffing monitoring image; and
sending the automatic doffing scheduling task to the network device, so that the network device forwards the automatic doffing scheduling task to an automatic doffing device.

In a third aspect, provided is a network device, including:
a first receiving module configured to receive a doffing monitoring image from a terminal device;
a first sending module configured to send the doffing monitoring image to a text recognition system;
a second receiving module configured to receive an automatic doffing scheduling task from an automatic doffing system; where the automatic doffing scheduling task includes a task generated by the automatic doffing system according to a recognition result of the doffing monitoring image by the text recognition system; and
a second sending module configured to send the automatic doffing scheduling task to an automatic doffing device.

In a fourth aspect, provided is an automatic doffing system, including:
a first receiving module configured to receive a recognition result of a doffing monitoring image by a text recognition system; where the doffing monitoring image is received by the text recognition system from a network device;
a processing module configured to generate an automatic doffing scheduling task according to the recognition result of the doffing monitoring image; and
a first sending module configured to send the automatic doffing scheduling task to the network device, so that the network device forwards the automatic doffing scheduling task to an automatic doffing device.

In a fifth aspect, provided is an automatic doffing communication system, including:
a network device configured to execute any automatic doffing communication method executed by the network device in the embodiments of the present disclosure;
an automatic doffing system configured to execute any automatic doffing communication method executed by the automatic doffing system in the embodiments of the present disclosure; and
a text recognition system configured to receive a doffing monitoring image from the network device, and recognize the doffing monitoring image to obtain a recognition result.

In a sixth aspect, provided is an electronic device, including:
at least one processor; and
a memory connected in communication with the at least one processor;
where the memory stores an instruction executable by the at least one processor, and the instruction, when executed by the at least one processor, enables the at least one processor to execute the method of any embodiment of the present disclosure.

In a seventh aspect, provided is a non-transitory computer-readable storage medium storing a computer instruction thereon, and the computer instruction is used to cause a computer to execute the method of any embodiment of the present disclosure.

In an eighth aspect, provided is a computer program product including a computer program, and the computer program implements the method of any embodiment of the present disclosure, when executed by a processor.

The beneficial effects of the technical solution provided in the present disclosure at least include:
according to embodiments of the present disclosure, the network device such as 5G base station provides a basis for the automatic doffing system to generate the reasonable automatic doffing scheduling task by receiving and forwarding the doffing monitoring image. The network device also allows the automatic doffing device to perform the automatic doffing scheduling task by receiving and forwarding the doffing monitoring image. The state data of the winding machine on the monitoring device of the winding machine can be obtained through the doffing monitoring image, thereby reducing the cost of purchasing the state data of the winding machine, and saving the production cost. By automatically generating and executing the automatic doffing scheduling task to complete the doffing operation, the intelligence and informatization degree of spinning production can be improved, and the doffing efficiency can be improved. The use of the 5G technology to transmit the doffing monitoring image and the automatic doffing scheduling task can increase the speed and quantity of data transmission, and improve the timeliness of information acquisition and task release.

It should be understood that the content described in this part is not intended to identify critical or essential features of embodiments of the present disclosure, nor is it used to limit the scope of the present disclosure. Other features of the present disclosure will be easily understood through the following description.

### BRIEF DESCRIPTION OF THE DRAWINGS

In the accompanying drawings, the same reference numbers represent the same or similar parts or elements throughout the accompanying drawings, unless otherwise specified. These accompanying drawings are not necessarily drawn to scale. It should be understood that these accompanying drawings only depict some embodiments provided according to the present disclosure, and should not be considered as limiting the scope of the present disclosure.
FIG. 1 is a schematic flowchart of an automatic doffing communication method according to an embodiment of the present disclosure.
FIG. 2 is a schematic flowchart of an automatic doffing communication method according to another embodiment of the present disclosure.
FIG. 3 is a schematic diagram of an exemplary doffing monitoring image of the present disclosure.
FIG. 4 is a schematic flowchart of an automatic doffing communication method according to another embodiment of the present disclosure.
FIG. 5 is a schematic flowchart of an automatic doffing communication method according to another embodiment of the present disclosure.
FIG. 6 is a schematic flowchart of an automatic doffing communication method according to another embodiment of the present disclosure.
FIG. 7 is a schematic flowchart of an automatic doffing communication method according to an embodiment of the present disclosure.
FIG. 8 is a schematic flowchart of an automatic doffing communication method according to another embodiment of the present disclosure.
FIG. 9 is a schematic flowchart of an automatic doffing communication method according to another embodiment of the present disclosure.
FIG. 10 is a schematic flowchart of an automatic doffing communication method according to another embodiment of the present disclosure.
FIG. 11 is a schematic flowchart of an automatic doffing communication method according to another embodiment of the present disclosure.
FIG. 12 is a schematic flowchart of an automatic doffing communication method according to another embodiment of the present disclosure.
FIG. 13 is a schematic structural diagram of a network device according to an embodiment of the present disclosure.
FIG. 14 is a schematic structural diagram of an automatic doffing system according to an embodiment of the present disclosure.
FIG. 15 is a schematic structural diagram of an automatic doffing communication system according to an embodiment of the present disclosure.
FIG. 16 is an overall architecture diagram of a system according to an example of the present disclosure.
FIG. 17 is a schematic flowchart of automatic doffing through a transfer station according to an example of the present disclosure.
FIG. 18 is a schematic flowchart of automatic doffing control through a cache station according to an example of the present disclosure.
FIG. 19 is a schematic flowchart of an automatic doffing control method.
FIG. 20 is a schematic flowchart of an automatic doffing control method according to an example of the present disclosure.
FIG. 21 is a block diagram of an electronic device for implementing the method of the embodiment of the present disclosure.

### DETAILED DESCRIPTION

The present disclosure will be described below in detail with reference to the accompanying drawings. The same reference numbers in the accompanying drawings represent elements with identical or similar functions. Although various aspects of the embodiments are shown in the accompanying drawings, the accompanying drawings are not necessarily drawn to scale unless specifically indicated.

In addition, in order to better illustrate the present disclosure, numerous specific details are given in the following specific implementations. Those having ordinary skill in the art should understand that the present disclosure may be performed without certain specific details. In some examples, methods, means, elements and circuits well known to those having ordinary skill in the art are not described in detail, in order to highlight the subject matter of the present disclosure.

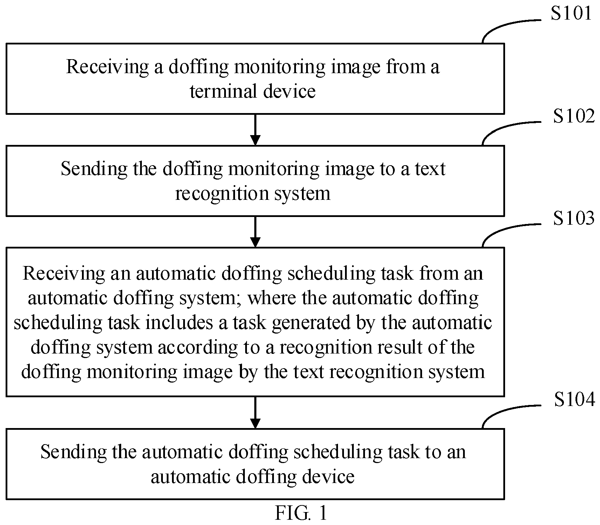

FIG. 1 is a schematic flowchart of an automatic doffing communication method according to an embodiment of the present disclosure, applied to a network device. This method includes:
S101: receiving a doffing monitoring image from a terminal device.
S102: sending the doffing monitoring image to a text recognition system.
S103: receiving an automatic doffing scheduling task from an automatic doffing system; where the automatic doffing scheduling task includes a task generated by the automatic doffing system according to a recognition result of the doffing monitoring image by the text recognition system.
S104: sending the automatic doffing scheduling task to an automatic doffing device.

In the embodiment of the present disclosure, the network device may include a 5G base station, a 5G base station server, or other communication devices. The terminal device may include a Personal Digital Assistant (PDA), a screen of a doffing monitoring device, a workshop data monitoring screen, etc. The doffing monitoring image is obtained by photographing using the terminal device or by taking a screenshot of a screen of the terminal device. For example, a PDA with an image sensor is used to shoot the doffing monitoring page on the screen of the monitoring device of the winding machine at both ends of the production line to obtain the doffing monitoring image, and the doffing monitoring image is transmitted to the 5th Generation Mobile Communication Technology (5G) base station. For another example, the doffing monitoring device takes a screenshot of the doffing monitoring page on its own screen to obtain the doffing monitoring image, and transmits the doffing monitoring image to the 5G base station. In an embodiment of the present disclosure, the terminal device can detect the doffing monitoring images, and do not retain and send the doffing monitoring images with insufficient clarity or incompleteness. The doffing in the embodiment of the present disclosure can also be described as spooling, and both can mean removing the yarn spindle from the winding machine.

In an embodiment of the present disclosure, the automatic doffing system may further include an automatic doffing scheduling system. The automatic doffing scheduling task may be generated through the automatic doffing scheduling system. For example, the automatic doffing system receives the state data of the winding machine obtained by the text recognition system, and the automatic doffing scheduling system can generate the automatic doffing scheduling task according to the state data of the winding machine. The automatic doffing scheduling system can send the generated automatic doffing scheduling task to the network device such as 5G base station.

In an embodiment of the present disclosure, the automatic doffing device may include an automatic doffing robot, a track-type automatic doffing device, etc., where the automatic doffing robot may include an AGV for automatic doffing; and the track-type automatic doffing device may be in many forms such as sky rail, ground rail, sky-ground rail, etc.

In an embodiment of the present disclosure, the step in which the network device sends the automatic doffing scheduling task to the automatic doffing device may include: the network device, such as 5G base station, sends the received automatic doffing scheduling task to the corresponding automatic doffing robot or track-type automatic doffing device according to the identification information of the automatic doffing device in the automatic doffing scheduling task, and the automatic doffing device performs the doffing operation according to the received automatic doffing scheduling task.

According to embodiments of the present disclosure, the network device such as 5G base station provides a basis for the automatic doffing system to generate the reasonable automatic doffing scheduling task by receiving and forwarding the doffing monitoring image. The network device also allows the automatic doffing device to perform the automatic doffing scheduling task by receiving and forwarding the doffing monitoring image. The state data of the winding machine on the monitoring device of the winding machine is obtained through the doffing monitoring image, so that the cost of continuously purchasing the state data of the winding machine from the supplier of the winding machine every year can be reduced, saving the production cost. By automatically generating and executing the automatic doffing scheduling task to complete the doffing operation, the intelligence and informatization degree of spinning production can be improved, and the doffing efficiency can be improved. The use of the 5G technology to transmit the doffing monitoring image and the automatic doffing scheduling task can increase the speed and quantity of data transmission, and improve the timeliness of information acquisition and task release.

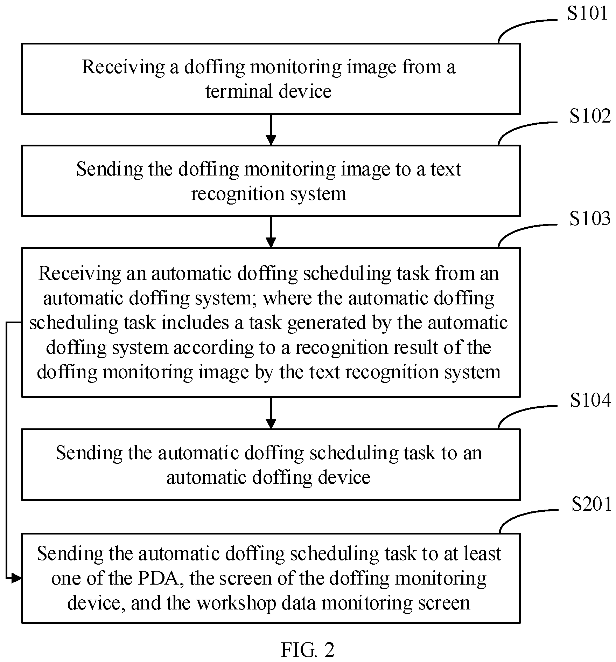

FIG. 2 is a schematic flowchart of an automatic doffing communication method according to another embodiment of the present disclosure. This method may include one or more features of the automatic doffing communication method described above. In an implementation, this method may further include:
S201: sending the automatic doffing scheduling task to at least one of the PDA, the screen of the doffing monitoring device, and the workshop data monitoring screen.

In an embodiment of the present disclosure, after receiving the automatic doffing scheduling task, the network device may also send the automatic doffing scheduling task to the terminal device for display. For example, after receiving the automatic doffing scheduling task, the network device such as 5G base station may also send the automatic doffing scheduling task to the PDA of the relevant person while sending the automatic doffing scheduling task to the automatic doffing device, and the automatic doffing scheduling task is displayed on the display page of the PDA. The relevant person may include a person assisting in doffing. For another example, after receiving the automatic doffing scheduling task, the network device such as 5G base station sends the automatic doffing scheduling task to the workshop data monitoring screen or PDA when there is no idle automatic doffing device, and the workshop data monitoring screen or PDA displays the automatic doffing scheduling task so that doffing can be done in other manners, such as manual doffing or adding a new automatic doffing robot.

According to the embodiment of the present disclosure, the terminal device can display the information of the automatic doffing scheduling task in real time, provide an intuitive visual management basis for workshop production management, and improve the intelligence and informatization degree of workshop production management. The automatic doffing scheduling task that is not performed by the automatic doffing device is displayed by the PDA, the screen of the doffing monitoring device, the workshop data monitoring screen, etc., so as to prompt the relevant person to handle the relevant task in time, to avoid pipe explosion.

In an implementation, the recognition result of the doffing monitoring image by the text recognition system includes the state data of the winding machine.

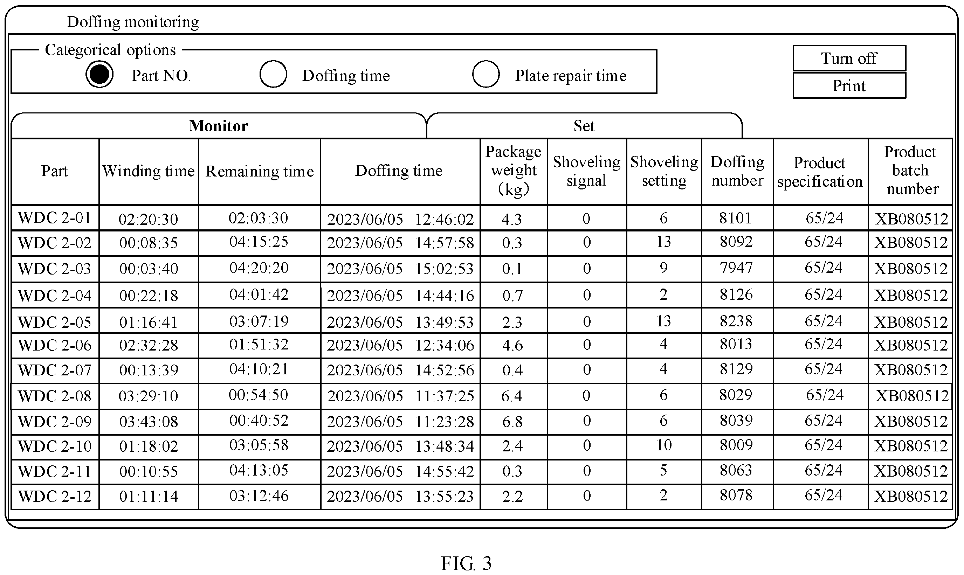

In an embodiment of the present disclosure, the automatic doffing system can use the OCR text recognition model to recognize the doffing monitoring image and then obtain the state data of the winding machine. FIG. 3 is a schematic diagram of an exemplary doffing monitoring image of the present disclosure. The figure includes a doffing monitoring page. In the doffing monitoring page, the state data of one winding machine is stored in each row, the state data of all winding machines is arranged vertically, and the state data attribute of each winding machine corresponds to specific data. The doffing monitoring page also includes a table header, which may include the attribute name of each state data. The attribute name may include line type and/or machine number, winding time, remaining time, doffing time, package weight, shoveling setting, shoveling signal, shoveling time, current doffing number, product specification, doffing order, product batch number, etc. The text recognition system can process the doffing monitoring image based on the OCR text recognition model to obtain the state data of the winding machine required to generate the automatic doffing scheduling task, such as the line type and/or machine number, and the winding time, remaining time and doffing time corresponding to the line type and/or machine number, etc. Here, the line type may represent the production line where the winding machine that produces yarn spindles is located, and the machine number may represent the position of the winding machine that produces yarn spindles in the production line. The winding time may represent a length of time during which the currently wound yarn spindle has been wound, the remaining time may represent a length of time that the currently wound yarn spindle needs before the winding is completed, and the doffing time may represent a time point at which the winding of the currently wound yarn spindle is expected to be completed and at which doffing is required. The package weight may represent the weight of the currently wound yarn spindle that has been wound, and the unit may be kg. The shoveling setting may represent the total number of times the winding machine shovels within the set time. The shoveling signal may represent whether the spinning box connected to the current winding machine requires to be shoveled. The shoveling time may represent the length of time during which the spinning box that is connected to the current winding machine and is being shoveled has been shoveled. The current doffing number may represent the doffing number corresponding to the yarn spindle currently being wound. The product specification may represent the type of the yarn spindle currently being wound. The doffing order may represent the doffing sequence corresponding to the yarn spindle being wound. The product batch number may indicate that a group of yarn spindles are yarn spindles of the same specification or same production batch.

According to the embodiment of the present disclosure, the network device such as 5G base station sends the doffing monitoring image to the text recognition system, to provide data support for obtaining the state data of the winding machine. Using the 5G technology to transmit images can improve the efficiency of image transmission and improve the timeliness of information acquisition.

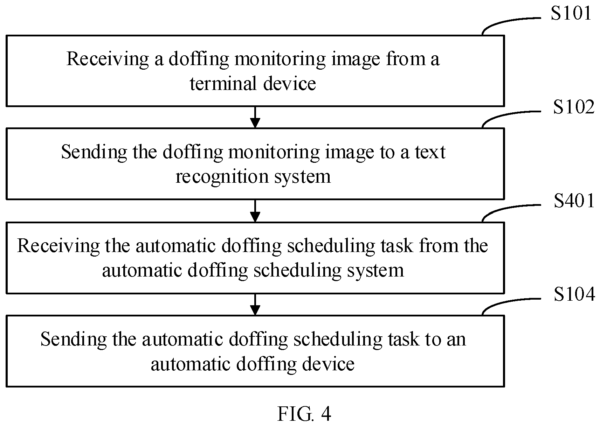

FIG. 4 is a schematic flowchart of an automatic doffing communication method according to another embodiment of the present disclosure. This method may include one or more features of the automatic doffing communication method described above. In an implementation, the automatic doffing system includes an automatic doffing scheduling system, and S103 of receiving the automatic doffing scheduling task from the automatic doffing system includes:
S401: receiving the automatic doffing scheduling task from the automatic doffing scheduling system.

Here, the automatic doffing scheduling task is a task generated by the automatic doffing scheduling system according to the state data of the winding machine and a working state of the automatic doffing device; the state data of the winding machine includes at least one of winding time, remaining time and doffing time corresponding to a line type and/or a machine number; and the automatic doffing scheduling task includes at least one of identification information, doffing time and doffing sequence of the automatic doffing device that needs to be scheduled.

In an embodiment of the present disclosure, when a plurality of automatic doffing scheduling tasks need to be generated, the automatic doffing scheduling system can sort the generated automatic doffing scheduling tasks according to any one of the winding time, remaining time and doffing time. The automatic doffing scheduling task may also be called the automatic doffing control task. Alternatively, the task for the automatic doffing robot is called the automatic doffing scheduling task, and the task for the track-type automatic doffing device is called the automatic doffing control task. After obtaining the state data of the winding machine, the automatic doffing scheduling system can generate the automatic doffing scheduling tasks according to the line type and/or machine number, winding time, remaining time, doffing time, product batch number and other data in the state data of the winding machine, as well as the load state, position, remaining power, identification information and other data in the working state of the automatic doffing device. The generated automatic doffing scheduling tasks should at least include the identification information of the automatic doffing device, the doffing time, the doffing sequence, the machine number and other data. For example, the state data of the winding machine obtained by the automatic doffing scheduling system includes: State data 1: winding machine A, doffing time of 11:50:00, and batch number of XB080512; State data 2: winding machine B, doffing time of 12:00:00, and batch number of XB080516; and State data 3: winding machine C, doffing time of 11:40:00, and batch number of XB020717M. The working state of the automatic doffing device obtained by the automatic doffing scheduling system includes: Working state 1: AGV1, no load, power of 60%; Working state 2: AGV2, full load, power of 63%; Working state 3: AGV3, half load, power of 13%; and Working state 4: AGV4, half load, power of 81%. The automatic doffing scheduling tasks generated by the automatic doffing scheduling system according to the state data of the winding machine and the working state of the automatic doffing device described above include: Task 1: AGV1, 11:40:00, winding machine C; Task 2: AGV4, 11:50:00, winding machine A; and Task 3: AGV1, 12:00:00, winding machine B.

According to the embodiment of the present disclosure, the network device such as 5G base station can receive the automatic doffing scheduling tasks generated by the automatic doffing scheduling system. The received automatic doffing scheduling tasks contain the identification information of the automatic doffing device, providing the basis for distributing the automatic doffing scheduling tasks.

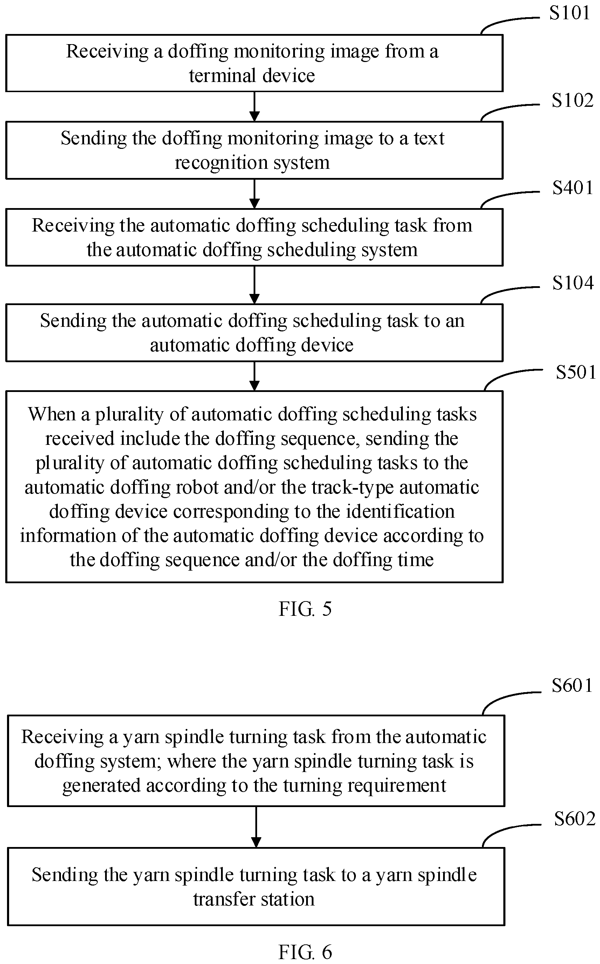

FIG. 5 is a schematic flowchart of an automatic doffing communication method according to another embodiment of the present disclosure. This method may include one or more features of the automatic doffing communication method described above. In an implementation, the automatic doffing device includes an automatic doffing robot and/or a track-type automatic doffing device, and S104 of sending the automatic doffing scheduling task to the automatic doffing device includes:
S501: when a plurality of automatic doffing scheduling tasks received include the doffing sequence, sending the plurality of automatic doffing scheduling tasks to the automatic doffing robot and/or the track-type automatic doffing device corresponding to the identification information of the automatic doffing device according to the doffing sequence and/or the doffing time.

In the embodiment of the present disclosure, the automatic doffing system can send the automatic doffing scheduling task to the corresponding automatic doffing device according to the identification information of the automatic doffing device in the automatic doffing scheduling task. In the case where a plurality of automatic doffing scheduling tasks are received, the automatic doffing scheduling tasks corresponding to the doffing sequence can be sequentially sent to the automatic doffing device according to the doffing sequence of the automatic doffing scheduling tasks. The network device can also sequentially send the automatic doffing scheduling tasks corresponding to the doffing sequence to the terminal device according to the doffing sequence of the automatic doffing scheduling tasks. For example, the automatic doffing tasks generated based on the above example include: task 1, task 2 and task 3. When sending the generated automatic doffing tasks, the automatic doffing scheduling system can firstly send the task 1 to the 5G base station, which sends the task 1 to the AGV1; then send the task 2 to the 5G base station, which sends the task 2 to the AGV4; and then send the task 3 to the 5G base station, which sends the task 3 to the AGV1. For another example, the automatic doffing scheduling system can send the above-mentioned task 1, task 2 and task 3 to the 5G base station at one time, and subsequently, the 5G base station sends the task 1 and task 3 to the AGV1 and the task 2 to the AGV4, respectively.

According to the embodiment of the present disclosure, the network device such as 5G base station can send the automatic doffing scheduling tasks to the corresponding automatic doffing device in sequence according to the identification information and doffing sequence of the automatic doffing device in the automatic doffing scheduling tasks, improving the intelligence degree of workshop production management. Sending the automatic doffing scheduling tasks based on the 5G technology can improve the speed and timeliness of task distribution, and ensure that the doffing tasks are executed in a timely and effective manner.

FIG. 6 is a schematic flowchart of an automatic doffing communication method according to another embodiment of the present disclosure. This method may include one or more features of the automatic doffing communication method described above. In an implementation, the state data of the winding machine further includes a turning requirement, and the method further includes:
S601: receiving a yarn spindle turning task from the automatic doffing system; where the yarn spindle turning task is generated according to the turning requirement; and
S602: sending the yarn spindle turning task to a yarn spindle transfer station.

In an embodiment of the present disclosure, the yarn spindle transfer station may be used to temporarily store the yarn spindles, and perform pre-processing for transferring the yarn spindles to the trolley and transporting the yarn spindles to the packaging production line. The pre-processing method may include turning over. The transfer station may include a yarn rack for temporarily storing the yarn spindles, and a control device for yarn rack rotation. The yarn spindle turning task includes the model or specification of the yarn spindle. The yarn spindle transfer station can perform the yarn spindle turning operation according to the yarn spindle turning task. Here, the way to generate the yarn spindle turning task may include: when the type of the winding machine is a winding machine that simultaneously winds the yarn spindles through two yarn rollers, the yarn spindle on one of the two yarn rollers needs to be turned over at the transfer station. For example, the winding machine that simultaneously winds the yarn spindles through two yarn rollers may include a twin winding machine, a two-position winding machine, a two-roller winding machine, etc. The automatic doffing system can generate the yarn spindle turning task based on the type of the winding machine and the identifier of the yarn roller. The yarn spindle turning task may include the information of the yarn spindle that needs to be turned over and/or the identifier of the target yarn rack where the yarn spindle that needs to be turned over is located, or other information. The automatic doffing system can send the yarn spindle turning task to the network device such as 5G base stations. The network device can send the yarn spindle turning task to the transfer station. The control device for yarn rack rotation at the transfer station can control the target yarn rack to rotate according to the yarn spindle turning task, and then turn over the yarn spindle hanging on the target yarn rack. Moreover, when receiving the yarn spindle turning task sent by the network device, the yarn spindle transfer station queries the yarn rack that temporarily stores the yarn spindle with the corresponding specification or model in its own management system according to the information such as the model or specification of the yarn spindle in the yarn spindle turning task, and use the control device for yarn rack rotation to rotate the corresponding yarn rack, to complete the turning operate.

In an embodiment of the present disclosure, the automatic doffing system may generate the yarn spindle turning task according to the turning requirement in the state data of the winding machine; or may determine whether the yarn spindle needs to be turned over according to the product specification and/or product batch number in the state data of the winding machine, and generate the yarn spindle turning task when there is a turning requirement.

According to the embodiment of the present disclosure, the network device such as 5G base station can send the yarn spindle turning task to the yarn spindle transfer station, to provide the basis for the yarn spindle transfer station to perform the yarn spindle turning operation, and improve the intelligence and automation degree of production management. The use of the 5G technology to transmit the yarn spindle turning task can improve the distribution efficiency and execution efficiency of the yarn spindle turning task.

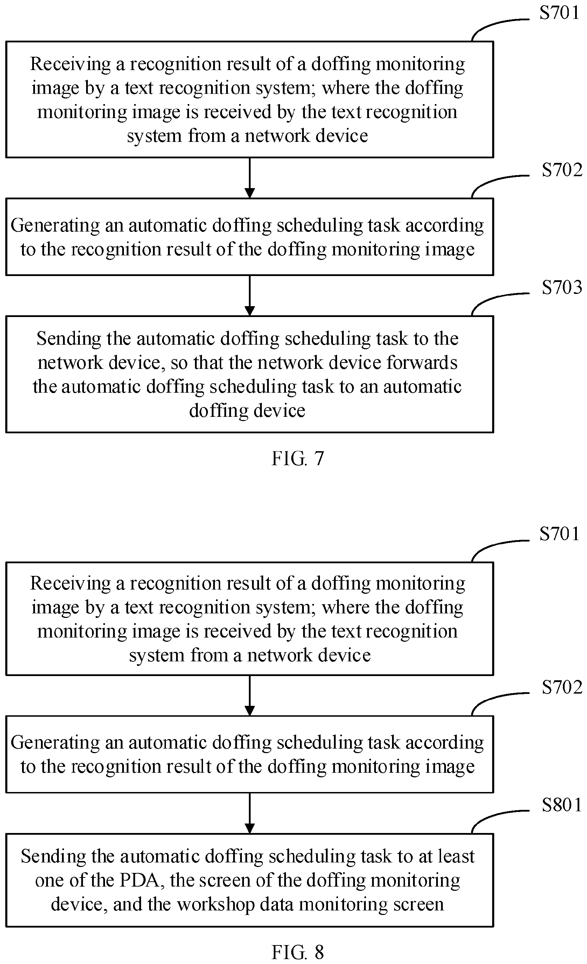

FIG. 7 is a schematic flowchart of an automatic doffing communication method according to an embodiment of the present disclosure, applied to an automatic doffing system. This method includes:
S701: receiving a recognition result of a doffing monitoring image by a text recognition system; where the doffing monitoring image is received by the text recognition system from a network device.
S702: generating an automatic doffing scheduling task according to the recognition result of the doffing monitoring image.
S703: sending the automatic doffing scheduling task to the network device, so that the network device forwards the automatic doffing scheduling task to an automatic doffing device.

In an implementation, the doffing monitoring image is received by the network device from a terminal device, and the doffing monitoring image is obtained by photographing using the terminal device or by taking a screenshot of a screen of the terminal device.

In an embodiment of the present disclosure, the automatic doffing system may include an automatic doffing scheduling system, etc.; and the network device may include a 5G base station. The automatic doffing system may receive the doffing monitoring image sent by the network device, and the network device may receive the doffing monitoring image from the terminal device. For example, the terminal device such as a PDA with an image sensor captures the doffing monitoring page from the screen of the monitoring device of the winding machine at both ends of the production line, to obtain a doffing monitoring image. The terminal device sends the doffing monitoring image to the 5G base station, and then the 5G base station sends the received doffing monitoring image to the text recognition system. The text recognition system sends the parsed and recognized state data to the automatic doffing scheduling system, and the automatic doffing scheduling system generates the automatic doffing scheduling task based on the state data. The automatic doffing system can send the automatic doffing scheduling task to the automatic doffing device through the network device. For example, after generating the automatic doffing scheduling task, the automatic doffing scheduling system can send the automatic doffing scheduling task to the network device such as 5G base station. The 5G base station then sends the received automatic doffing scheduling task to the corresponding automatic doffing device, such as AGV, sky rail, ground rail, sky and ground rail, etc., according to the identifier in the task.

According to the embodiment of the present disclosure, the automatic doffing system can obtain the state data of the winding machine based on the captured doffing monitoring image, and generate the corresponding automatic doffing scheduling task according to the state data of the winding machine, thereby avoiding the cost of directly obtaining the state data of the winding machine from the supplier of the winding machine, and saving the production cost. The state data of the winding machine can be quickly and comprehensively obtained by using the OCR model, improving the intelligence and automation degree of spinning production.

FIG. 8 is a schematic flowchart of an automatic doffing communication method according to another embodiment of the present disclosure. This method may include one or more features of the automatic doffing communication method described above. In an implementation, this method may further include:
S801: sending the automatic doffing scheduling task to at least one of the PDA, the screen of the doffing monitoring device, and the workshop data monitoring screen.

In an embodiment of the present disclosure, after generating the automatic doffing scheduling task, the automatic doffing system may further send the automatic doffing task to the terminal device for display. The automatic doffing system may send the automatic doffing task to the terminal device through the network device, or may send the automatic doffing task to the terminal device directly. For example, after generating the automatic doffing scheduling task, the automatic doffing scheduling system may also send the automatic doffing scheduling task to the workshop data monitoring screen while sending the automatic doffing scheduling task to the automatic doffing device. The automatic doffing scheduling task is displayed on the workshop data monitoring screen. For another example, when there is no automatic doffing device that can receive the automatic doffing scheduling task, the automatic doffing system sends the automatic doffing scheduling task to the workshop data monitoring screen or PDA, and the workshop data monitoring screen or PDA displays the automatic doffing scheduling task.

According to the embodiment of the present disclosure, the terminal device can display the information of the automatic doffing scheduling task in real time, provide an intuitive visual management basis for workshop production management, and improve the intelligence and informatization degree of workshop production management. The automatic doffing scheduling task that is not performed by the automatic doffing device is displayed by the PDA, the screen of the doffing monitoring device, the workshop data monitoring screen, etc., so as to prompt the relevant person to handle the relevant task in time, to avoid pipe explosion.

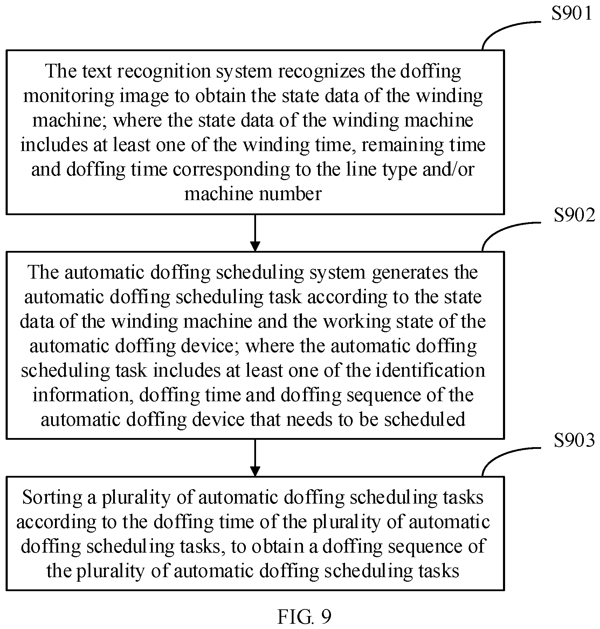

FIG. 9 is a schematic flowchart of an automatic doffing communication method according to another embodiment of the present disclosure. This method may include one or more features of the automatic doffing communication method described above. In an implementation, S702 of generating the automatic doffing scheduling task according to the doffing monitoring image includes at least one of:
S901: the text recognition system recognizes the doffing monitoring image to obtain the state data of the winding machine; where the state data of the winding machine includes at least one of the winding time, remaining time and doffing time corresponding to the line type and/or machine number.
S902: the automatic doffing scheduling system generates the automatic doffing scheduling task according to the state data of the winding machine and the working state of the automatic doffing device; where the automatic doffing scheduling task includes at least one of the identification information, doffing time and doffing sequence of the automatic doffing device that needs to be scheduled.

In an embodiment of the present disclosure, the automatic doffing system may include the text recognition system. After receiving the doffing monitoring image, the text recognition system recognizes the doffing monitoring image based on the Optical Text recognition (OCR) model, to obtain the state data of the winding machine. After the text recognition, the text recognition system can detect the obtained state data of the winding machine, and send the state data of the winding machine to the automatic doffing scheduling system when the obtained state data of the winding machine is complete. When the obtained state data of the winding machine is incomplete, the doffing monitoring image is re-obtained and recognized. The text recognition system can send the obtained state data of the winding machine to the automatic doffing scheduling system, and the automatic doffing scheduling system generates the automatic doffing scheduling task according to the state data of the winding machine. After generating the automatic doffing scheduling task, the automatic doffing system can send the automatic doffing scheduling task to the network device. The text recognition system can obtain the state data of the winding machine from the doffing monitoring image based on the OCR model, and transmit the state data of the winding machine to the automatic doffing scheduling system. In an embodiment of the present disclosure, when the terminal device does not filter the doffing monitoring images, the doffing monitoring images can be filtered through the automatic doffing system such as text recognition system, to delete the doffing monitoring images with insufficient clarity or incompleteness.

In an embodiment of the present disclosure, the text recognition system can recognize the doffing monitoring image based on the OCR text recognition model, to obtain the state data of the winding machine. The state data of the winding machine may include the line type and/or machine number, and the winding time, remaining time, doffing time, package weight, shoveling setting, shoveling signal, shoveling time, current doffing number, product specification, doffing order and product batch number corresponding to the line type and/or machine number, etc. After using the OCR text recognition model to recognize the text information, the regular expression may be used to process the text information to obtain the state data of the winding machine such as the line type and/or machine number, and the winding time, remaining time, doffing time, package weight, shoveling setting, shoveling signal, shoveling time, current doffing number, product specification, doffing order and product batch number corresponding to the line type and/or machine number, etc.. After obtaining the text information, the text recognition system may also directly send the text information to the automatic doffing scheduling system. The automatic doffing scheduling system uses the regular expression to process the text information to obtain the state data of the winding machine.

In an embodiment of the present disclosure, the automatic doffing scheduling system may generate the automatic doffing scheduling task according to the state data of the winding machine. The automatic doffing scheduling system may also request the working state of the automatic doffing device from the automatic doffing device. The working state of the automatic doffing device may include the identification information, load condition and power condition of the automatic doffing device, etc. The automatic doffing scheduling system may generate the automatic doffing scheduling task based on the state data of the winding machine and the working state of the automatic doffing device.

According to the embodiment of the present disclosure, the automatic doffing system can obtain the state data of the winding machine according to the doffing monitoring image, improving the acquisition efficiency and ease of use of the state data of the winding machine, and reducing the cost of obtaining the state data of the winding machine; and the automatic doffing system may also automatically generate the doffing task according to the state data of the winding machine and the working state of the automatic doffing device, increasing the generation speed of the automatic doffing task.

In an implementation, as shown in FIG. 9, S702 of generating the automatic doffing scheduling task according to the doffing monitoring image further includes:
S903: sorting a plurality of automatic doffing scheduling tasks according to the doffing time of the plurality of automatic doffing scheduling tasks, to obtain a doffing sequence of the plurality of automatic doffing scheduling tasks.

In an embodiment of the present disclosure, the automatic doffing scheduling system may sort a plurality of generated automatic doffing scheduling tasks according to the state data of the winding machine and/or the doffing time in the automatic doffing scheduling task, and generate the corresponding sequence numbers. For example, the sorting may be performed in order from early to late according to the doffing time. If there are three automatic doffing scheduling tasks currently generated, where the doffing time of task A is 10:50:00, the doffing time of task B is 10:30:00, and the doffing time of task C is 11:00:00, then the order of the automatic doffing scheduling tasks after sorting is: 1) Task B; 2) Task A; 3) Task C, where 1, 2 and 3 are the doffing sequence.

According to the embodiment of the present disclosure, the automatic doffing scheduling system can sort the automatic doffing scheduling tasks when a plurality of automatic doffing scheduling tasks are generated, to provide support for subsequent release and execution of the automatic doffing scheduling tasks.

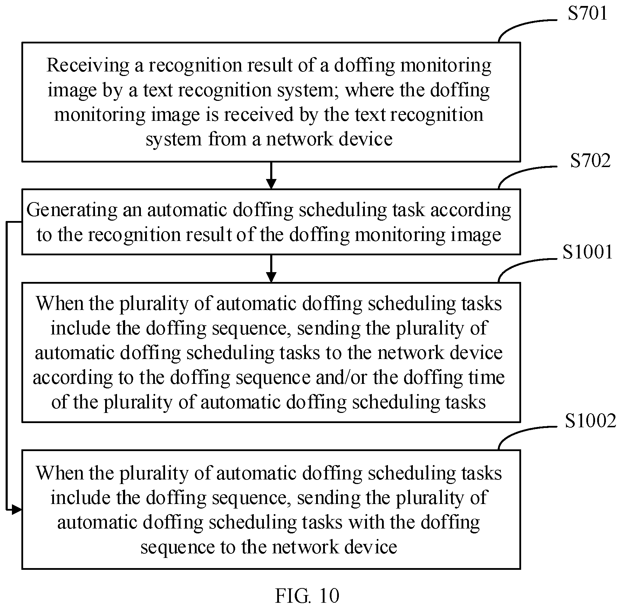

FIG. 10 is a schematic flowchart of an automatic doffing communication method according to another embodiment of the present disclosure. This method may include one or more features of the automatic doffing communication method described above. In an implementation, S703 of sending the automatic doffing scheduling task to the network device includes:
S1001: when the plurality of automatic doffing scheduling tasks include the doffing sequence, sending the plurality of automatic doffing scheduling tasks to the network device according to the doffing sequence and/or the doffing time of the plurality of automatic doffing scheduling tasks; or
S1002: when the plurality of automatic doffing scheduling tasks include the doffing sequence, sending the plurality of automatic doffing scheduling tasks with the doffing sequence to the network device.

In an embodiment of the present disclosure, when releasing a plurality of automatic doffing scheduling tasks, the automatic doffing system may sequentially send the automatic doffing scheduling tasks to the network device such as 5G base station according to the doffing sequence of the plurality of automatic doffing scheduling tasks after sorting, and then the network device such as 5G base station sends the automatic doffing scheduling tasks to the automatic doffing device. When releasing a plurality of automatic doffing scheduling tasks, the automatic doffing system may also package and send the plurality of generated automatic doffing scheduling tasks with the doffing sequence to the network device such as 5G base station, and then the network device such as 5G base station separately sends each automatic doffing scheduling task to the corresponding automatic doffing device.

According to the embodiment of the present disclosure, the automatic doffing system can release the automatic doffing scheduling tasks in the order of doffing time. The use of the item-by-item release method can ensure the timeliness of release of the automatic doffing scheduling tasks and ensure the execution efficiency of the automatic doffing scheduling tasks. The use of the packaged sending method can give full play to the advantages of 5G communication, and reduce the pressure of request and response in the communication system.

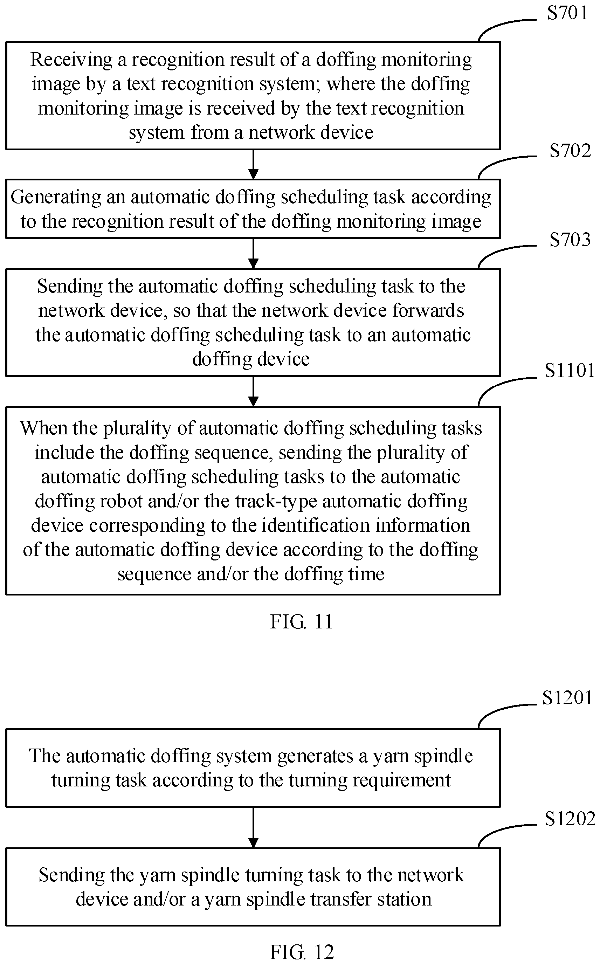

FIG. 11 is a schematic flowchart of an automatic doffing communication method according to another embodiment of the present disclosure. This method may include one or more features of the automatic doffing communication method described above. In an implementation, the automatic doffing device includes an automatic doffing robot and/or a track-type automatic doffing device, and the method further includes:
S1101: when the plurality of automatic doffing scheduling tasks include the doffing sequence, sending the plurality of automatic doffing scheduling tasks to the automatic doffing robot and/or the track-type automatic doffing device corresponding to the identification information of the automatic doffing device according to the doffing sequence and/or the doffing time.

In an embodiment of the present disclosure, the automatic doffing scheduling task also includes the identification information of the automatic doffing device, and the identification information of the automatic doffing device may include the identifier of the automatic doffing device that performs the automatic doffing scheduling task. After receiving the automatic doffing scheduling task, the network device parses the doffing sequence of the task and the identification information of the automatic doffing device, and releases the automatic doffing scheduling task to the automatic doffing device corresponding to the task, such as the automatic doffing robot (for example, AGV) and/or track-type automatic doffing device (for example, sky rail, ground rail, sky-ground rail, etc.), according to the doffing sequence and the identification information of the automatic doffing device. For example, the network device such as 5G base station receives three automatic doffing scheduling tasks, namely: 1) task A, AGV1; 2) task B, sky rail 1; 3) task C, AGV2. The 5G base station can sequentially send the task A to the AGV1, the task B to the sky rail 1, and the task C to the AGV2.

According to the embodiment of the present disclosure, the automatic doffing system can accurately release the automatic doffing task to the corresponding automatic doffing device, and the corresponding automatic doffing device performs the task, improving the efficiency and accuracy of task release, and ensuring the reliability of execution of the automatic doffing task.

FIG. 12 is a schematic flowchart of an automatic doffing communication method according to another embodiment of the present disclosure. This method may include one or more features of the automatic doffing communication method described above. In an implementation, the state data of the winding machine further includes a turning requirement, and the method further includes:
S1201: the automatic doffing system generates a yarn spindle turning task according to the turning requirement; and
S1202: sending the yarn spindle turning task to the network device and/or a yarn spindle transfer station.

In an embodiment of the present disclosure, the transfer station can turn over the yarn spindles produced according to the production requirement for the yarn spindles that need to be transferred using the transfer station. The transfer station may include a rotatable yarn roller for hanging yarn spindles. After a yarn spindle is hung on the yarn roller, the turning operation of the yarn spindle can be completed by rotating the yarn roller by 180 degrees. The transfer station may also include a rotatable trolley. After a yarn spindle is hung on the yarn roller of the trolley, the trolley is rotated by 180 degrees to complete the turning operation of the yarn spindle.

In an embodiment of the present disclosure, the automatic doffing system can determine a yarn spindle that need to be turned over based on the turning requirement in the state data of the winding machine, and generate a corresponding yarn spindle turning task that may include the batch number of the yarn spindle and the hanging position of the yarn spindle in the transfer station. It is also possible to query the turning requirement corresponding to the specification in the automatic doffing system according to the specification of the yarn spindle, and generate the yarn spindle turning task. The automatic doffing system may send the yarn spindle turning task to the network device such as 5G base station, and the network device may forward the yarn spindle turning task to the transfer station. The automatic doffing system may also directly send the yarn spindle turning task to the transfer station. After receiving the yarn spindle turning task, the transfer station may turn over the corresponding yarn spindle according to the batch number and hanging position of the yarn spindle in the yarn spindle turning task. When the yarn spindle is packaged, the QR code of the yarn spindle may be arranged on the inner surface of the yarn spindle paper tube by inkjet coding, printing, pasting, etc.

According to the embodiment of the present disclosure, the yarn spindle that needs to be turned over can be automatically turned over, improving the packaging efficiency of the yarn spindle.

In an embodiment of the present disclosure, the state data of the winding machine, the automatic doffing scheduling task, the yarn spindle turning task, etc. may be stored in association. The stored data may include line type and/or machine number, doffing time, package weight, product specification, merger number, product batch number, QR code of yarn spindle, orientation of yarn spindle, etc. The corresponding data of the yarn spindle may be queried and the life cycle of the yarn spindle may be monitored by scanning the QR code on the inner surface of the yarn spindle paper tube.

According to the embodiment of the present disclosure, the corresponding data corresponding to the yarn spindle can be queried at any time through the QR code of the yarn spindle, to obtain the production information and specification information of the yarn spindle. It is convenient for customers to trace back the corresponding production process and production equipment after feeding back problems, and determine the causes of the problems.

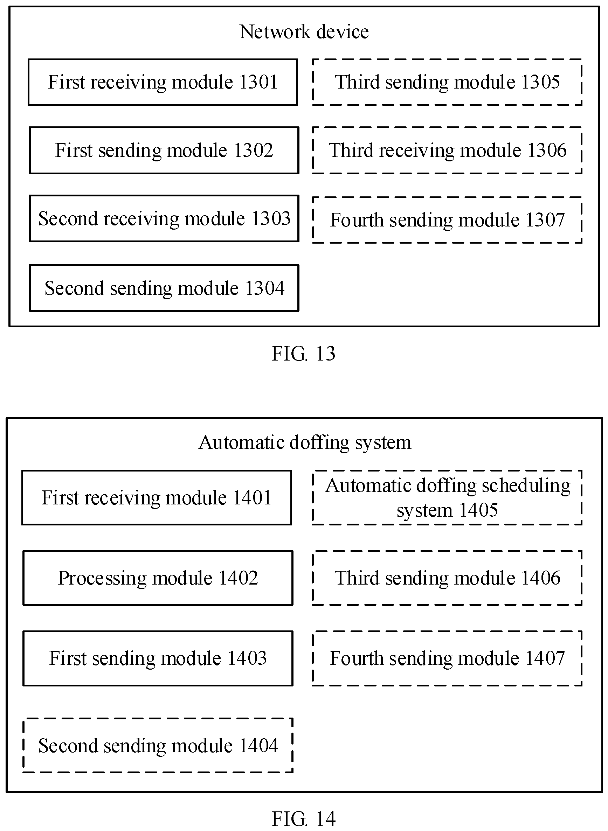

FIG. 13 is a schematic structural diagram of a network device according to an embodiment of the present disclosure. This network device may include:
a first receiving module 1301 configured to receive a doffing monitoring image from a terminal device;
a first sending module 1302 configured to send the doffing monitoring image to a text recognition system;
a second receiving module 1303 configured to receive an automatic doffing scheduling task from an automatic doffing system; where the automatic doffing scheduling task includes a task generated by the automatic doffing system according to a recognition result of the doffing monitoring image by the text recognition system; and
a second sending module 1304 configured to send the automatic doffing scheduling task to an automatic doffing device.

In an implementation, the doffing monitoring image is obtained by photographing using the terminal device or by taking a screenshot of a screen of the terminal device.

In an implementation, the terminal device includes at least one of a Personal Digital Assistant (PDA), a screen of a doffing monitoring device, and a workshop data monitoring screen.

In an implementation, the network device further includes:
a third sending module 1305 configured to send the automatic doffing scheduling task to at least one of the PDA, the screen of the doffing monitoring device, and the workshop data monitoring screen.

In an implementation, the recognition result of the doffing monitoring image by the text recognition system includes the state data of the winding machine.

In an implementation, the automatic doffing system includes an automatic doffing scheduling system, and the second receiving module is configured to receive the automatic doffing scheduling task from the automatic doffing scheduling system.

In an implementation, the automatic doffing scheduling task is a task generated by the automatic doffing scheduling system according to the state data of the winding machine and a working state of the automatic doffing device; the state data of the winding machine includes at least one of winding time, remaining time and doffing time corresponding to a line type and/or a machine number; and the automatic doffing scheduling task includes at least one of identification information, doffing time and doffing sequence of the automatic doffing device that needs to be scheduled.

In an implementation, the automatic doffing device includes an automatic doffing robot and/or a track-type automatic doffing device, and the second sending module is configured to, when a plurality of automatic doffing scheduling tasks received include the doffing sequence, send the plurality of automatic doffing scheduling tasks to the automatic doffing robot and/or the track-type automatic doffing device corresponding to the identification information of the automatic doffing device according to the doffing sequence and/or the doffing time.

In an implementation, the state data of the winding machine further includes a turning requirement, and the network device further includes:
a third receiving module 1306 configured to receive a yarn spindle turning task from the automatic doffing system; where the yarn spindle turning task is generated according to the turning requirement; and
a fourth sending module 1307 configured to send the yarn spindle turning task to a yarn spindle transfer station.

FIG. 14 is a schematic structural diagram of an automatic doffing system according to an embodiment of the present disclosure. The automatic doffing system may include:
a first receiving module 1401 configured to receive a recognition result of a doffing monitoring image by a text recognition system; where the doffing monitoring image is received by the text recognition system from a network device;
a processing module 1402 configured to generate an automatic doffing scheduling task according to the recognition result of the doffing monitoring image; and
a first sending module 1403 configured to send the automatic doffing scheduling task to the network device, so that the network device forwards the automatic doffing scheduling task to an automatic doffing device.

In an implementation, the doffing monitoring image is received by the network device from a terminal device, and the doffing monitoring image is obtained by photographing using the terminal device or by taking a screenshot of a screen of the terminal device.

In an implementation, the terminal device includes at least one of a Personal Digital Assistant (PDA), a screen of a doffing monitoring device, and a workshop data monitoring screen.

In an implementation, the automatic doffing system further includes:
a second sending module 1404 configured to send the automatic doffing scheduling task to at least one of the PDA, the screen of the doffing monitoring device, and the workshop data monitoring screen.

In an implementation, the automatic doffing system includes an automatic doffing scheduling system 1405, and the automatic doffing system may communicate with the text recognition system.

The text recognition system is configured to recognize the doffing monitoring image to obtain the state data of a winding machine; where the state data of the winding machine includes at least one of winding time, remaining time and doffing time corresponding to a line type and/or a machine number.

The automatic doffing scheduling system 1405 is configured to generate the automatic doffing scheduling task according to the state data of the winding machine and a working state of the automatic doffing device; where the automatic doffing scheduling task includes at least one of identification information, doffing time and doffing sequence of the automatic doffing device that needs to be scheduled.

In an implementation, the processing module 1402 is further configured to sort a plurality of automatic doffing scheduling tasks according to the doffing time of the plurality of automatic doffing scheduling tasks, to obtain a doffing sequence of the plurality of automatic doffing scheduling tasks.

In an implementation, the first sending module 1403 is configured to:
when the plurality of automatic doffing scheduling tasks include the doffing sequence, send the plurality of automatic doffing scheduling tasks to the network device according to the doffing sequence and/or the doffing time of the plurality of automatic doffing scheduling tasks; or
when the plurality of automatic doffing scheduling tasks include the doffing sequence, send the plurality of automatic doffing scheduling tasks with the doffing sequence to the network device.

In an implementation, the automatic doffing device includes an automatic doffing robot and/or a track-type automatic doffing device.

In an implementation, the automatic doffing system further includes:
a third sending module 1406 configured to, when the plurality of automatic doffing scheduling tasks include the doffing sequence, send the plurality of automatic doffing scheduling tasks to the automatic doffing robot and/or the track-type automatic doffing device corresponding to the identification information of the automatic doffing device according to the doffing sequence and/or the doffing time.

In an implementation, the state data of the winding machine further includes a turning requirement, and the processing module 1402 is further configured to generate a yarn spindle turning task based on the turning requirement.

In an implementation, the automatic doffing system further includes: a fourth sending module 1407 configured to send the yarn spindle turning task to the network device and/or a yarn spindle transfer station.

In an implementation, the processing module 1402 is further configured to store the state data of the winding machine and the automatic doffing scheduling task correlatively, and store one or more QR codes correspondingly to the above data; where the one QR code corresponds to a set of corresponding data, and the QR code is used to query the corresponding data of the yarn spindle.

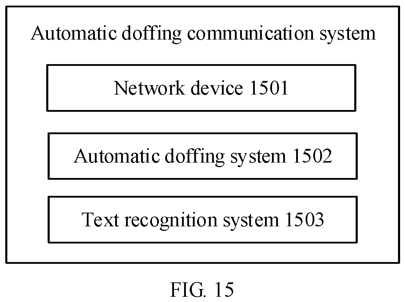

FIG. 15 is a schematic structural diagram of an automatic doffing communication system according to an embodiment of the present disclosure, including:
a network device 1501 configured to execute the automatic doffing communication method executed by the above network device;
an automatic doffing system 1502 configured to execute the automatic doffing communication method executed by the above automatic doffing system; and
a text recognition system 1503 configured to receive a doffing monitoring image from the network device, and recognize the doffing monitoring image to obtain a recognition result.

For the description of specific functions and examples of the modules and sub-modules of the devices and systems in the embodiment of the present disclosure, reference may be made to the relevant description of the corresponding steps in the above-mentioned method embodiments, and details are not repeated here.

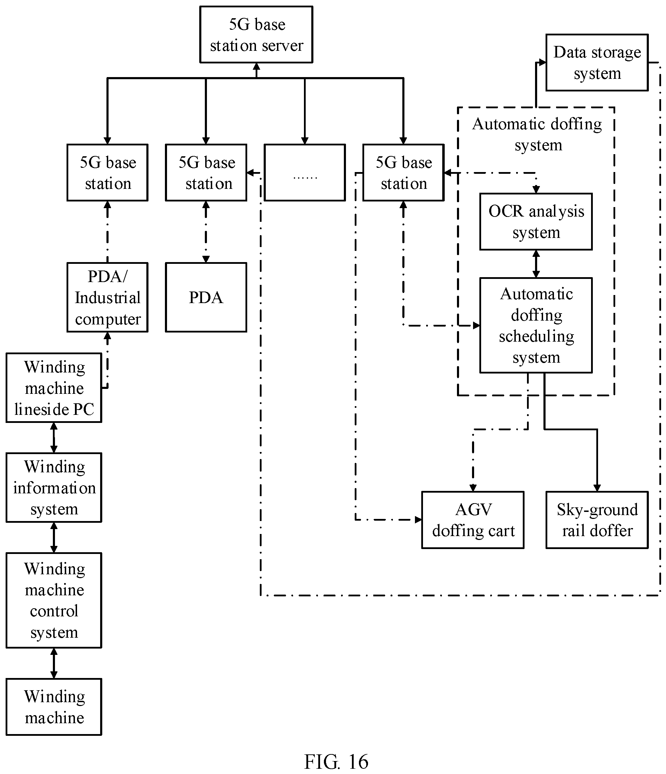

FIG. 16 is an overall architecture diagram of a system according to an example of the present disclosure. As shown in FIG. 16, the system may include a winding information system, a winding machine control system, a winding machine, a winding machine lineside PC, a PDA/industrial tablet computer (Portable Android Device, PAD), a 5G base station, a 5G base station server, an automatic doffing system, an automatic doffing scheduling system, a text recognition system, a data storage system, a sky-ground rail doffer, and an AGV doffing cart. Here, the winding information system, winding machine control system, winding machine and winding machine lineside PC can communicate with each other, and the PDA/industrial PAD can obtain the doffing monitoring image from the winding machine lineside PC. The specific obtaining method may include: using the PDA/industrial PAD to capture the monitoring page of the winding machine lineside PC. The PDA/industrial PAD obtains the doffing monitoring image and can send the doffing monitoring image to the automatic doffing system through the 5G communication system. The 5G base station and the 5G base station server together constitute the 5G communication system. The automatic doffing system may include an automatic doffing scheduling system and a text recognition system such as an OCR analysis system. After the automatic doffing system receives the doffing monitoring image, the OCR analysis system processes the doffing monitoring image to obtain the state data of the winding machine, and then the automatic doffing scheduling system generates an automatic doffing scheduling task according to the state data of the winding machine. The OCR analysis system may be regarded as a part of the automatic doffing system, or may be set up independently from the automatic doffing system. The automatic doffing scheduling system may send the generated automatic doffing scheduling task to the sky-ground rail doffer/AGV doffing cart through the 5G communication system, or may send the generated automatic doffing scheduling task to the sky-ground rail doffer/AGV doffing cart directly. The data storage system may receive the corresponding data stream from the automatic doffing system and store the corresponding data stream. Using the PDA/industrial PAD, the corresponding data may be queried by scanning the QR code on the inner surface of the yarn spindle paper tube.

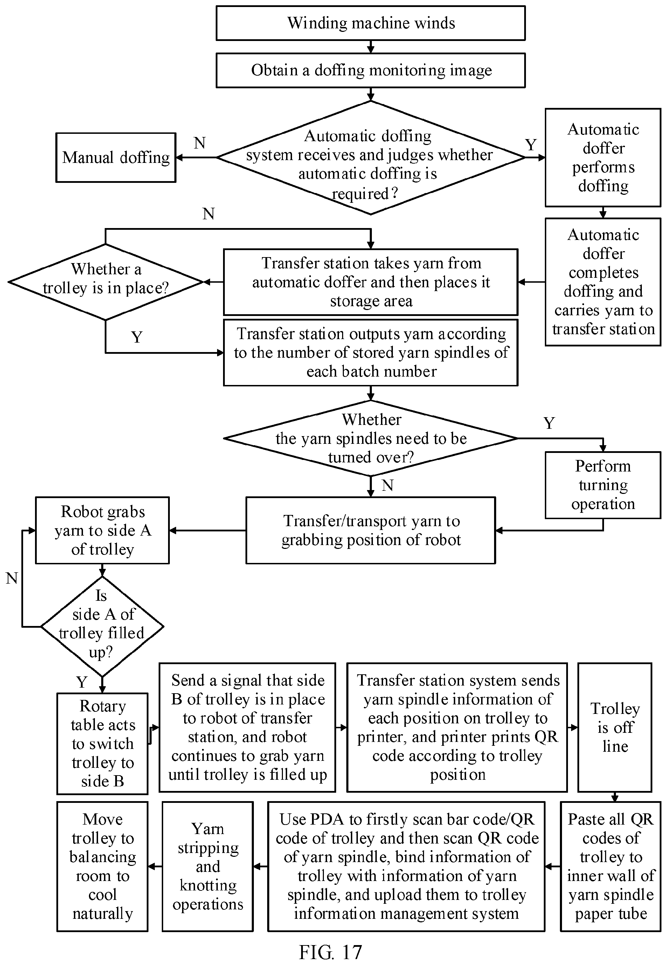

FIG. 17 is a schematic flowchart of automatic doffing through a transfer station according to an example of the present disclosure. As shown in FIG. 17, after the winding machine starts winding, the PDA is used to obtain a doffing monitoring image and send the doffing monitoring image to the automatic doffing system. The automatic doffing system judges whether automatic doffing is required. If not, the manual doffing is performed. If so, an automatic doffing scheduling task is generated, and the automatic doffer (automatic doffing device) is scheduled to perform the automatic doffing.

After the automatic doffing is completed, the automatic doffer transfers the yarn spindles to the transfer station, and the transfer station takes the yarn spindles from the automatic doffer and then stores the yarn spindles in the storage area. It is judged whether a trolley is in place on the rotary table. If not, the yarn spindles continue to be stored in the storage area; if so, the transfer station outputs the yarn according to the batch number and the number of yarn spindles in the storage area.

When the yarn is output, it is judged whether the yarn spindles need to be turned over. If so, the turning operation is performed and then the yarn is output; if not, the yarn is directly output. When the yarn is output, the yarn spindles are transferred to the position of the robotic arm robot, and the robot hangs the yarn spindles in sequence on the side A of the trolley. It is judged whether the side A of the trolley is filled up. If not, the yarn spindles continue to be hung to the side A; if not, the trolley is rotated by the rotary table so that the side B faces the robotic arm robot. After the trolley is rotated in place, the yarn continues to be hung to the side B until the trolley is filled up. The transfer station sends the yarn spindle information of each position on the trolley to the printer, and the QR code is printed according to the position of the trolley. The trolley is taken off the assembly line, and all the QR codes of the trolley are pasted to the inner wall of the yarn spindle paper tube. The PDA is used to firstly scan the QR code of the trolley and then scan the QR code of the yarn spindle, bind the information of the trolley with the information of the yarn spindle, and upload them to the trolley information management system. The yarn stripping and knotting operations are performed, the excess thread ends are removed, and the trolley is moved to the balancing room to cool naturally.

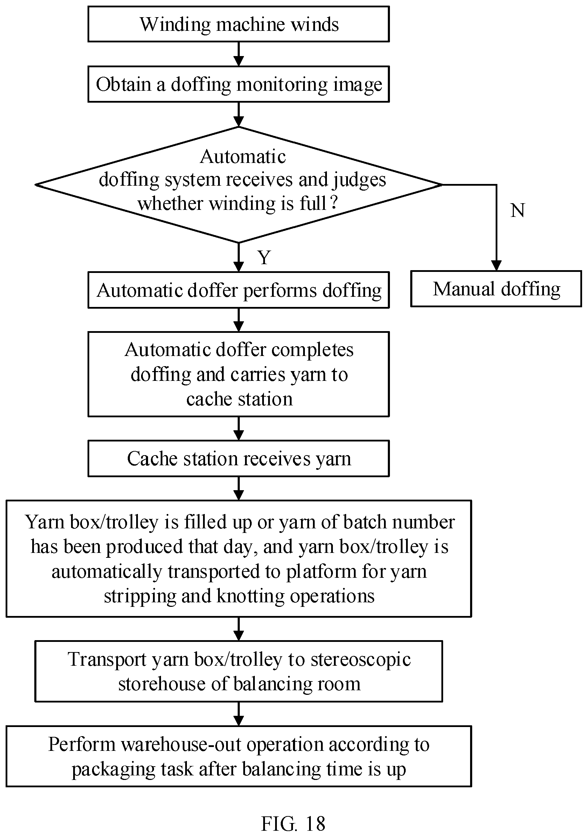

FIG. 18 is a schematic flowchart of automatic doffing control through a cache station according to an example of the present disclosure. As shown in FIG. 18, the main operation difference between this control process and the process of automatic doffing control through the transfer station in FIG. 17 is that the yarn is carried to the cache station after the automatic doffer completes doffing. The cache station does not turn over the yarn spindles. Therefore, after the cache station receives the yarn spindles, the yarn spindles are directly hung on the sides A and B of the trolley in sequence until the trolley is filled up. The yarn box/trolley is filled up or the yarn of the batch number has been produced that day, and the yarn box/trolley is automatically transported to the platform for the yarn stripping and knotting operations. After that, the yarn box/trolley is transported to the stereoscopic storehouse of the balancing room. After the balancing time is up, the yarn spindles are naturally cooled and taken out from storage according to the packaging task.

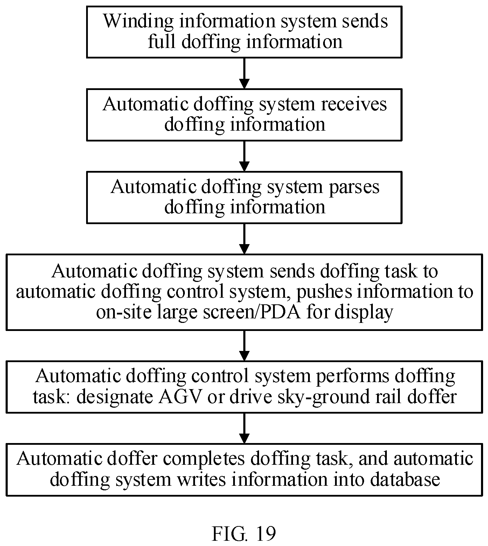

FIG. 19 is a schematic flowchart of an automatic doffing control method. As shown in FIG. 19, the winding information system sends the full doffing information, and then the automatic doffing system receives and parses the full doffing information, to obtain the automatic doffing task. The automatic doffing system sends the doffing task to the automatic doffing control system, pushes the information to the on-site large screen/PDA for display, and designates the AGV or drives the sky-ground rail doffer to perform the doffing task. Finally, the automatic doffer completes the doffing task, and the automatic doffing system writes the information into the database. This plan is executed based on the doffing information, and there is no unified scheduling and planning.

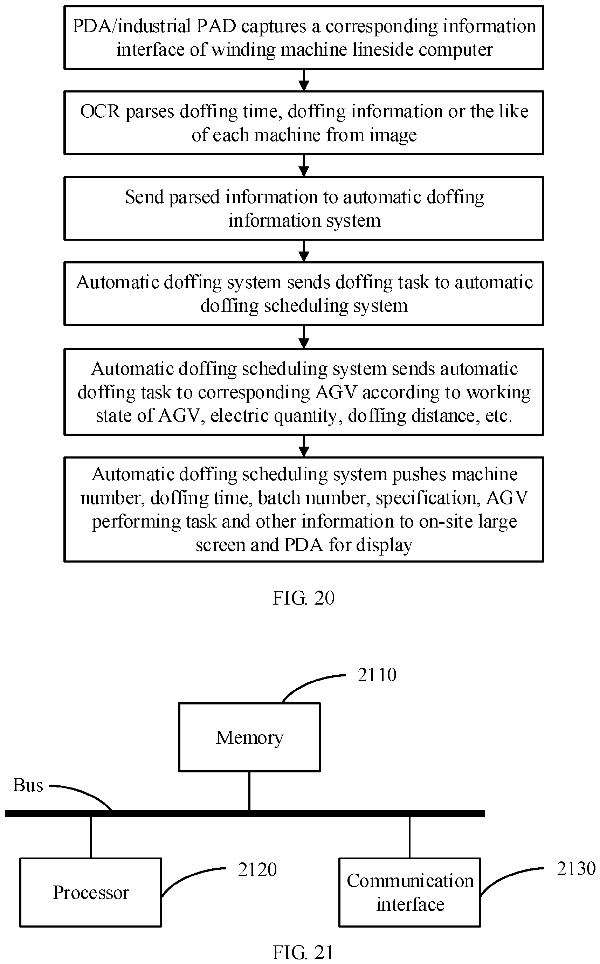

FIG. 20 is a schematic flowchart of an automatic doffing control method according to an example of the present disclosure. As shown in FIG. 20, this method uses the OCR text recognition technology to obtain the relevant data, thereby eliminating the need to purchase the value-added service from the manufacturer of the winding machine. In this method, the PDA/industrial computer is used to capture a corresponding information interface of the winding machine lineside computer, to obtain the doffing monitoring image. The OCR model is used to parse the state data of the winding machine such as the doffing time, the doffing information or the like of each machine from the doffing monitoring image. The parsed state data of the winding machine is sent to the automatic doffing system. The automatic doffing system generates an automatic doffing task according to the state data of the winding machine. The automatic doffing scheduling system sends the automatic doffing task to the AGV, and the AGV performs the automatic doffing task. In addition, the automatic doffing system pushes the machine number, the doffing time, the batch number, the specification, the identifier of the AGV performing the task and other information to the on-site large screen and PDA for display.

In the technical solution of the present disclosure, the acquisition, storage and application of the user's personal information involved are in compliance with relevant laws and regulations, and do not violate public order and good customs.

FIG. 21 is a structural block diagram of an electronic device according to an embodiment of the present disclosure. As shown in FIG. 21, the electronic device includes: a memory 2110 and a processor 2120, and the memory 2110 stores a computer program that can run on the processor 2120. There may be one or more memories 2110 and processors 2120. The memory 2110 may store one or more computer programs, and the one or more computer programs cause the electronic device to perform the method provided in the above method embodiment, when executed by the electronic device. The electronic device may also include: a communication interface 2130 configured to communicate with an external device for data interactive transmission.

If the memory 2110, the processor 2120 and the communication interface 2130 are implemented independently, the memory 2110, the processor 2120 and the communication interface 2130 may be connected to each other and complete communication with each other through a bus. The bus may be an Industry Standard Architecture (ISA) bus, a Peripheral Component Interconnect (PCI) bus, or an Extended Industry Standard Architecture (EISA) bus, etc. The bus may be divided into address bus, data bus, control bus, etc. For ease of representation, the buses are represented by only one thick line in Fig. 21, but it does not represent only one bus or only one type of bus.

Optionally, in a specific implementation, if the memory 2110, the processor 2120 and the communication interface 2130 are integrated on one chip, the memory 2110, the processor 2120 and the communication interface 2130 may communicate with each other through an internal interface.

It should be understood that the above-mentioned processor may be a Central Processing Unit (CPU) or other general-purpose processor, a Digital Signal Processor (DSP), an Application Specific Integrated Circuit (ASIC), a Field Programmable Gate Array (FPGA) or other programmable logic device, a discrete gate or transistor logic device, a discrete hardware component, etc. The general-purpose processor may be a microprocessor or any conventional processor, etc. It is worth noting that the processor may be a processor that supports the Advanced RISC Machines (ARM) architecture.

Further, optionally, the above-mentioned memory may include a read-only memory and a random access memory, and may also include a non-volatile random access memory. The memory may be a volatile memory or a non-volatile memory, or may include both a volatile memory and a non-volatile memory. Here, the non-volatile memory may include a Read-Only Memory (ROM), a Programmable ROM (PROM), an Erasable PROM (EPROM), an Electrically EPROM (EEPROM) or a flash memory. The volatile memory may include a Random Access Memory (RAM), which acts as an external cache. By way of illustration and not limitation, many forms of RAMs are available, for example, Static RAM (SRAM), Dynamic Random Access Memory (DRAM), Synchronous DRAM (SDRAM), Double Data Date SDRAM (DDR SDRAM), Enhanced SDRAM (ESDRAM), Synchlink DRAM (SLDRAM) and Direct RAMBUS RAM (DR RAM).

The above embodiments may be implemented in whole or in part by software, hardware, firmware or any combination thereof. When implemented by software, they may be implemented in the form of a computer program product in whole or in part. The computer program product includes one or more computer instructions. When the computer instructions are loaded and executed on a computer, the processes or functions described in the embodiments of the present disclosure are generated in whole or in part. The computer may be a general-purpose computer, a special-purpose computer, a computer network, or other programmable device. The computer instructions may be stored in a computer readable storage medium or transmitted from a computer readable storage medium to another computer readable storage medium. For example, the computer instructions may be transmitted from a website, computer, server or data center to another website, computer, server or data center in a wired (e.g., coaxial cable, optical fiber, Digital Subscriber Line (DSL)) or wireless (e.g., infrared, Bluetooth, microwave, etc.) way. The computer readable storage medium may be any available medium that can be accessed by a computer, or a data storage device such as server or data center that is integrated with one or more available media. The available media may be magnetic media (for example, floppy disk, hard disk, magnetic tape), optical media (for example, Digital Versatile Disc (DVD)), or semiconductor media (for example, Solid State Disk (SSD)), etc. It is worth noting that the computer readable storage medium mentioned in the present disclosure may be a non-volatile storage medium, in other words, may be a non-transitory storage medium.

Those having ordinary skill in the art can understand that all or some of the steps for implementing the above embodiments may be completed by hardware, or may be completed by instructing related hardware through a program. The program may be stored in a computer readable storage medium. The above-mentioned storage medium may be a read-only memory, a magnetic disk or an optical disk, etc.

In the description of the embodiments of the present disclosure, the description with reference to the terms "one embodiment", "some embodiments", "example", "specific example" or "some examples", etc. means that specific features, structures, materials or characteristics described in conjunction with the embodiment or example are included in at least one embodiment or example of the present disclosure. Moreover, the specific features, structures, materials or characteristics described may be combined in a suitable manner in any one or more embodiments or examples. In addition, those skilled in the art can integrate and combine different embodiments or examples and features of different embodiments or examples described in this specification without conflicting with each other.

In the description of the embodiments of the present disclosure, "/" represents or, unless otherwise specified. For example, A/B may represent A or B. The term "and/or" herein only describes an association relation of associated objects, which indicates that there may be three kinds of relations, for example, A and/or B may indicate that only A exists, or both A and B exist, or only B exists.

In the description of the embodiments of the present disclosure, the terms "first" and "second" are only for purpose of description, and cannot be construed to indicate or imply the relative importance or implicitly point out the number of technical features indicated. Therefore, the feature defined with "first" or "second" may explicitly or implicitly include one or more features. In the description of the embodiments of the present disclosure, "multiple" means two or more, unless otherwise specified.

The above descriptions are only exemplary embodiments of the present disclosure and not intended to limit the present disclosure. Any modifications, equivalent replacements, improvements and others made within the principle of the present disclosure shall be contained in the protection scope of the present disclosure.

## Claims

1. An automatic doffing communication method, applied to a network device, comprising:
receiving (S101) a doffing monitoring image from a terminal device;
sending (S102) the doffing monitoring image to a text recognition system;
receiving (S103) an automatic doffing scheduling task from an automatic doffing system; wherein the automatic doffing scheduling task comprises a task generated by the automatic doffing system according to a recognition result of the doffing monitoring image by the text recognition system; and
sending (S104) the automatic doffing scheduling task to an automatic doffing device.

2. The method of claim 1, wherein the doffing monitoring image is obtained by photographing using the terminal device or by taking a screenshot of a screen of the terminal device.

3. The method of claim 2, wherein the terminal device comprises at least one of a Personal Digital Assistant PDA, a screen of a doffing monitoring device, and a workshop data monitoring screen; and the method further comprises:
sending (S201) the automatic doffing scheduling task to at least one of the PDA, the screen of the doffing monitoring device, and the workshop data monitoring screen.

4. The method of claim 1, wherein the recognition result of the doffing monitoring image by the text recognition system comprises state data of a winding machine;
wherein the automatic doffing system comprises an automatic doffing scheduling system, and receiving (S103) the automatic doffing scheduling task from the automatic doffing system comprises:
receiving (S401) the automatic doffing scheduling task from the automatic doffing scheduling system;
wherein the automatic doffing scheduling task is a task generated by the automatic doffing scheduling system according to the state data of the winding machine and a working state of the automatic doffing device; the state data of the winding machine comprises at least one of winding time, remaining time and doffing time corresponding to a line type and/or a machine number; and the automatic doffing scheduling task comprises at least one of identification information, doffing time and doffing sequence of the automatic doffing device that needs to be scheduled;
wherein the automatic doffing device comprises an automatic doffing robot and/or a track-type automatic doffing device, and sending (S104) the automatic doffing scheduling task to the automatic doffing device comprises:
when a plurality of automatic doffing scheduling tasks received comprise the doffing sequence, sending (S501) the plurality of automatic doffing scheduling tasks to the automatic doffing robot and/or the track-type automatic doffing device corresponding to the identification information of the automatic doffing device according to the doffing sequence and/or the doffing time.

5. The method of claim 4, wherein the state data of the winding machine further comprises a turning requirement, and the method further comprises:
receiving (S601) a yarn spindle turning task from the automatic doffing system; wherein the yarn spindle turning task is generated according to the turning requirement; and
sending (S602) the yarn spindle turning task to a yarn spindle transfer station.

6. An automatic doffing communication method, applied to an automatic doffing system, comprising:
receiving (S701) a recognition result of a doffing monitoring image by a text recognition system; wherein the doffing monitoring image is received by the text recognition system from a network device;
generating (S702) an automatic doffing scheduling task according to the recognition result of the doffing monitoring image; and
sending (S703) the automatic doffing scheduling task to the network device, so that the network device forwards the automatic doffing scheduling task to an automatic doffing device.

7. The method of claim 6, wherein the doffing monitoring image is received by the network device from a terminal device, and the doffing monitoring image is obtained by photographing using the terminal device or by taking a screenshot of a screen of the terminal device.

8. The method of claim 6 or 7, wherein the terminal device comprises at least one of a Personal Digital Assistant PDA, a screen of a doffing monitoring device, and a workshop data monitoring screen; and the method further comprises:
sending (S801) the automatic doffing scheduling task to at least one of the PDA, the screen of the doffing monitoring device, and the workshop data monitoring screen.

9. The method of claim 6 or 7, wherein the automatic doffing system comprises an automatic doffing scheduling system, and generating (S702) the automatic doffing scheduling task according to the doffing monitoring image comprises:
recognizing (S901), by the text recognition system, the doffing monitoring image to obtain state data of a winding machine; wherein the state data of the winding machine comprises at least one of winding time, remaining time and doffing time corresponding to a line type and/or a machine number; and
generating (S902), by the automatic doffing scheduling system, the automatic doffing scheduling task according to the state data of the winding machine and a working state of the automatic doffing device; wherein the automatic doffing scheduling task comprises at least one of identification information, doffing time and doffing sequence of the automatic doffing device that needs to be scheduled;
wherein generating (S702) the automatic doffing scheduling task according to the doffing monitoring image, further comprises:
sorting (S903) a plurality of automatic doffing scheduling tasks according to doffing time of the plurality of automatic doffing scheduling tasks, to obtain a doffing sequence of the plurality of automatic doffing scheduling tasks;
wherein sending (S703) the automatic doffing scheduling task to the network device comprises:
when the plurality of automatic doffing scheduling tasks comprise the doffing sequence, sending (S 1001) the plurality of automatic doffing scheduling tasks to the network device according to the doffing sequence and/or the doffing time of the plurality of automatic doffing scheduling tasks; or
when the plurality of automatic doffing scheduling tasks comprise the doffing sequence, sending (S 1002) the plurality of automatic doffing scheduling tasks with the doffing sequence to the network device.

10. The method of claim 9, wherein the automatic doffing device comprises an automatic doffing robot and/or a track-type automatic doffing device, and the method further comprises:
when the plurality of automatic doffing scheduling tasks comprise the doffing sequence, sending (S 1101) the plurality of automatic doffing scheduling tasks to the automatic doffing robot and/or the track-type automatic doffing device corresponding to the identification information of the automatic doffing device according to the doffing sequence and/or the doffing time.

11. The method of claim 9, wherein the state data of the winding machine further comprises a turning requirement, and the method further comprises:
generating (S1201), by the automatic doffing system, a yarn spindle turning task according to the turning requirement; and
sending (S1202) the yarn spindle turning task to the network device and/or a yarn spindle transfer station.

12. A network device, comprising:
a first receiving module (1301) configured to receive a doffing monitoring image from a terminal device;
a first sending module (1302) configured to send the doffing monitoring image to a text recognition system;
a second receiving module (1303) configured to receive an automatic doffing scheduling task from an automatic doffing system; wherein the automatic doffing scheduling task comprises a task generated by the automatic doffing system according to a recognition result of the doffing monitoring image by the text recognition system; and
a second sending module (1304) configured to send the automatic doffing scheduling task to an automatic doffing device.

13. An automatic doffing system, comprising:
a first receiving module (1401) configured to receive a recognition result of a doffing monitoring image by a text recognition system; wherein the doffing monitoring image is received by the text recognition system from a network device;
a processing module (1402) configured to generate an automatic doffing scheduling task according to the recognition result of the doffing monitoring image; and
a first sending module (1403) configured to send the automatic doffing scheduling task to the network device, so that the network device forwards the automatic doffing scheduling task to an automatic doffing device.

14. An automatic doffing communication system, comprising:
a network device (1501) configured to execute the method of any one of claims 1 to 5;
an automatic doffing system (1502) configured to execute the method of any one of claims 6 to 11; and
a text recognition system (1503) configured to receive a doffing monitoring image from the network device, and recognize the doffing monitoring image to obtain a recognition result.

15. The system of claim 14, wherein the network device (1501) comprises a 5G base station and a 5G base station server.
